Europäisches Patentamt

European Patent Office

Office européen des brevets

(19)

(11) Publication number: **0 206 320**
**A2**

# (12) EUROPEAN PATENT APPLICATION

(21) Application number: **86108613.0**

(22) Date of filing: **24.06.86**

(51) Int. Cl.⁴: **H 01 R 13/74, H 01 R 13/627**

(30) Priority: **27.06.85 US 749243**

(43) Date of publication of application: **30.12.86**
**Bulletin 86/52**

(84) Designated Contracting States: **DE FR GB IT SE**

(71) Applicant: **Honeywell Information Systems Inc.,
Honeywell Plaza, Minneapolis Minnesota 55408 (US)**

(72) Inventor: **Noyes, Robert W., 88 Londonderry Road,
Framingham Massachusetts 01701 (US)**

(74) Representative: **Frohwitter, Bernhard, Dipl.-Ing. et al,
Bardehle-Pagenberg-Dost-Altenburg & Partner Patent-
und Rechtsanwälte Galileiplatz 1 Postfach 86 06 20,
8000 München 80 (DE)**

(54) **Universal internal latch and lock D shell connector.**

(57) A novel method and apparatus for latching and locking
D-type electrical connectors. In one embodiment a novel
«bud-stud» is utilized to replace pior art isoblocks or prior
art hexagonal nuts. The bud-stud is capable of mating with
either a prior art screw-type or spring-loaded latching arm
to latch and lock the electrical connectors to each other and
to a bulkhead.

Honeywell Information Systems Inc.
Honeywell Plaza
Minneapolis, MN 55408
USA

**0 206 320**

-1-

## BACKGROUND

1.     Field of the Invention

This invention relates generally to electrical connectors, and more particularly to a method and hardware for latching and locking internal and external bulkhead cables or to latch and lock two separate cables.

2.     Description of the Prior Art

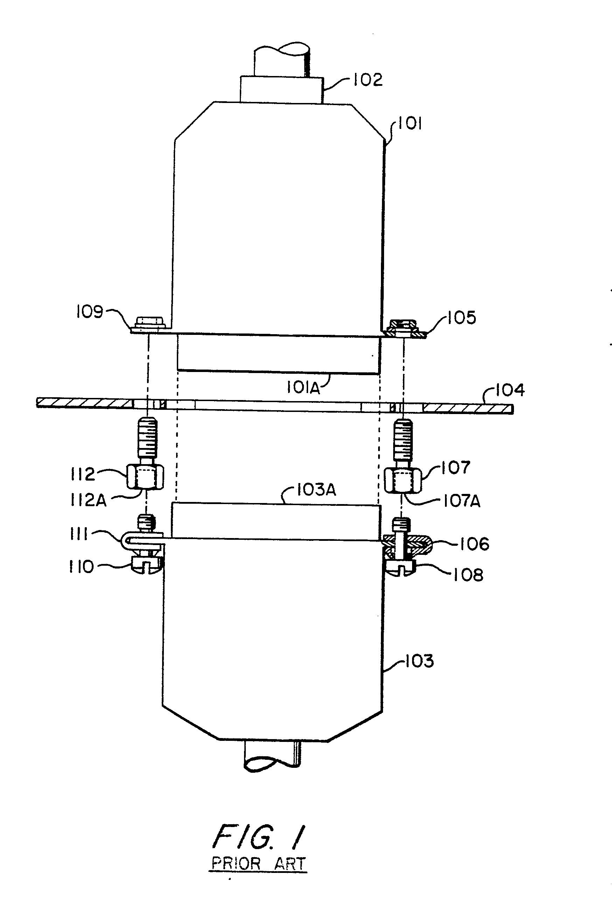

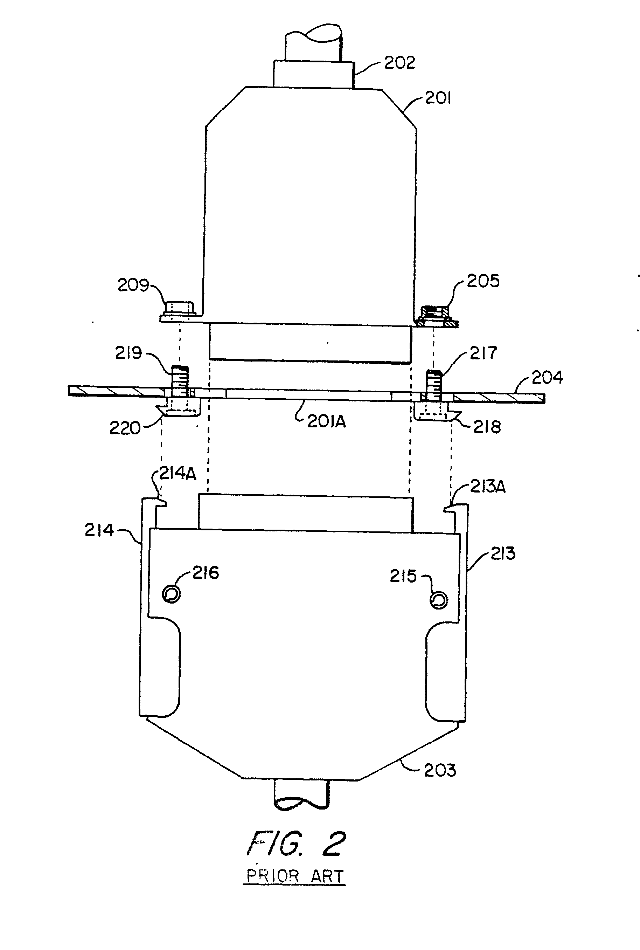

The prior art is replete with various hardware, methods and techniques for connecting electrical cables. Typical of prior art hardware for mounting and latching D-type electrical connectors are shown on Figures 1 and 2.

Referring now to Figure 1 there is shown a typical prior art electrical connector assembly in exploded view. Typically one of the molded assemblies 101 is mounted on the bulkhead mounting plate 104 via a hexagonal screws 107, 112 which thread into threaded nut assemblies 105, 109 which are pressed into the flange plate of the connector 101. The external end of the connector, having a molded assembly 103, is also mounted to the other side of the bulkhead mounting plate 104, by utilizing threaded screws 108, 110, which are held in place on the flange of connector molded assembly 103 via retainer clips 106, 111 pressed over the ends of the molded connector assembly flange. The head of screws 107, 112 have internal threads 107A, 112A into which the threaded portion of screws 108, 110 can screw, thus latching and locking the two assemblies 101, 103 firmly onto the bulkhead mounting plate 104.

In another type of prior art latch and lock device, an isoblock latch (International Standards Organization latch) mates with latching fingers. This type of prior art device is typically shown on Figure 2.

Referring to Figure 2, the molded connector assembly 201 has threaded inserts 205, 209 pressed into the flange of the connector assembly 201. Threaded screws 217, 219 are utilized to attach isoblocks 218, 220 to the bulkhead mounting plate 204 by threading screws 217, 219 into the threaded inserts 205, 209. This portion of the assembly then forms the internal portion having the bulkhead mounting plate as the boundary. The external connector assembly 203 has latching arms 213, 214 which are spring-loaded and held in position by roll pins 215, 216. Accordingly the latching arms are free to rotate around pins 215, 216 when the external connector assembly 203 is pressed into the internal connector assembly 201 via opening 201A. It should be noted that the latching arms 213, 214 have a beveled lip 213A, 214A which mates with the beveled lip of isoblocks 218, 220 respectively and forces the latching arms 213, 214 to pivot slightly around pins 215, 216. Once the lips 213A and 214A latch with the lips of isoblocks 218, 220, the spring forces the latching arm back into a vertical position thus latching external connector assembly 203 onto the bulkhead mounting plate 204.

These types of prior art mounting mechanisms and techniques have several disadvantages in the field. The threaded portions of the screws could be misaligned when screwed into the connector. Additionally the inserts for receiving screws, or the screws themselves, would fall out many times. Screws did become loose in use which made the connector assembly malfunction. In order to correct this problem different types of clips, C-rings, O-rings, new types of inserts, nuts, lock washers, have been used with little success in correcting the problem. Additional disadvantages of utilizing screws and nuts was the cost of labor in assembly and the need of hardware to latch the connectors, such as screwdrivers and nut drivers.

To correct some of these problems, the assembly of Figure 2 was developed which utilized isoblocks and latching arms to latch the connectors together. However the disadvantage to this type of arrangement was that it was not backward compatible, in that if an external connector assembly had latching arms and the internal connecting assembly was provided with the prior art hexagonal screw attachment, the two pieces could not be attached and latched. What was needed to make this backward compatible was a new type of device which could not only latch prior art type connector assemblies utilizing screws, but prior art type assemblies utilizing latching arms. Additionally a new type latching assembly for the internal molded connector assembly was needed in order to minimize labor costs, eliminate mounting tools and minimize labor costs in mounting in the field.

## OBJECTS OF THE INVENTION

A primary object of the invention, therefore, is to provide a new apparatus and technique for mounting/latching D-subminiature type connectors.

Another object of the invention is to provide a method and apparatus which is backward compatible for mounting/latching D-subminiature connectors to prior art screw-type devices, as well as to latching arm type devices.

Still another object of the invention is to provide a totally new and novel apparatus and technique for mounting/latching D-subminiature connectors utilizing no tools and a minimum of labor.

These and other objects of the invention will become apparent from the description of the preferred embodiments of the invention, when read in conjunction with the drawings contained herewith.

## SUMMARY OF THE INVENTION

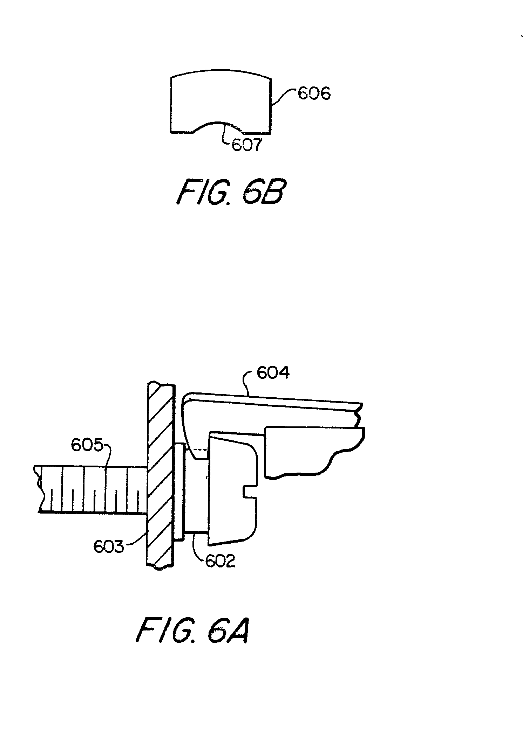

One embodiment of the invention utilizes the same threaded inserts 105, 109, 108, 110 which correspond to inserts 305, 309, 308, 310, but a new type stud, called a "bud-stud", 307, 312 is substituted for the screws 107, 112. The bud-stud 307, 312 is circular and has grooves 307A, 307B. Accordingly the internal and external connector assemblies can be latched and locked utilizing the prior art screw and nut technique, but can also be forward compatible and utilize external connectors having latch spring-loaded latching arms as shown in Figure 6A.

In another embodiment both the internal and external molded connectors have latching arms 513, 514, 501, 501AB. The latching arms of the internal connector can be squeezed through the bulkhead mounting plate opening and protrude to the exterior where they are available to be latched by the prior art external molded connectors having spring-loaded arms.

## BRIEF DESCRIPTION OF THE DRAWINGS

The novel features which are characteristic of the invention are set forth with particularity in the appended claims. The invention itself, however, both as to organization and operation, together with further objects and advantages thereof, may be best understood by reference to the following description, taken in conjunction with the drawings in which:

Figure 1 is an exploded side view of one type of prior art electrical connector assembly utilizing nuts and screws.

Figure 2 is another type of prior art assembly utilizing threaded inserts, isoblocks and latching arms.

Figure 3 is an exploded side view showing one embodiment of the invention.

Figure 4 is an exploded side view showing a second embodiment of the invention.

Figure 5 is an exploded side view showing a third embodiment of the invention.

Figures 6A and 6B show a detailed view of one feature of the invention.

Figure 7 is a three-dimensional drawing showing the bulkhead mounting plate utilized as part of the invention.

## DESCRIPTION OF PREFERRED EMBODIMENTS OF THE INVENTION

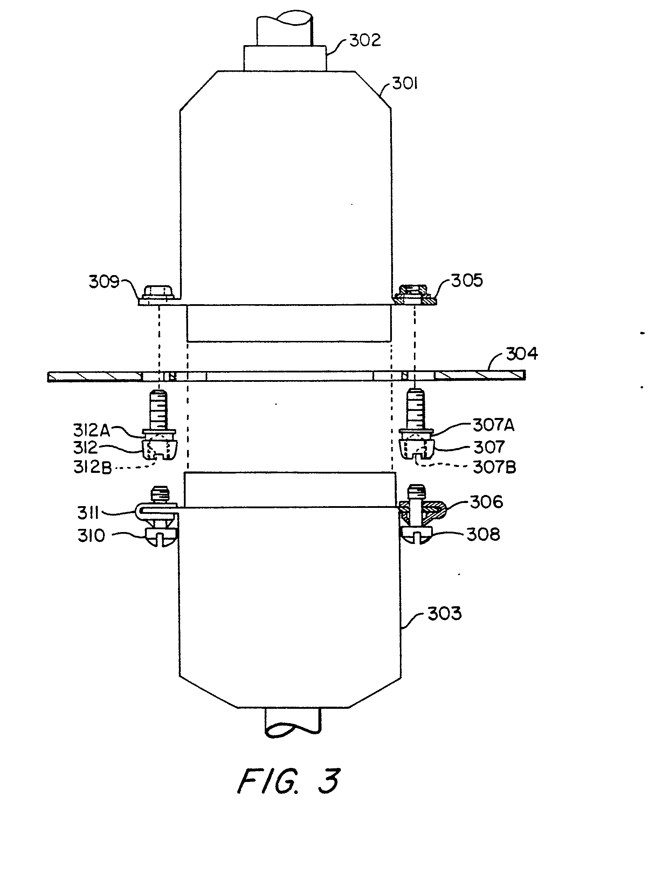

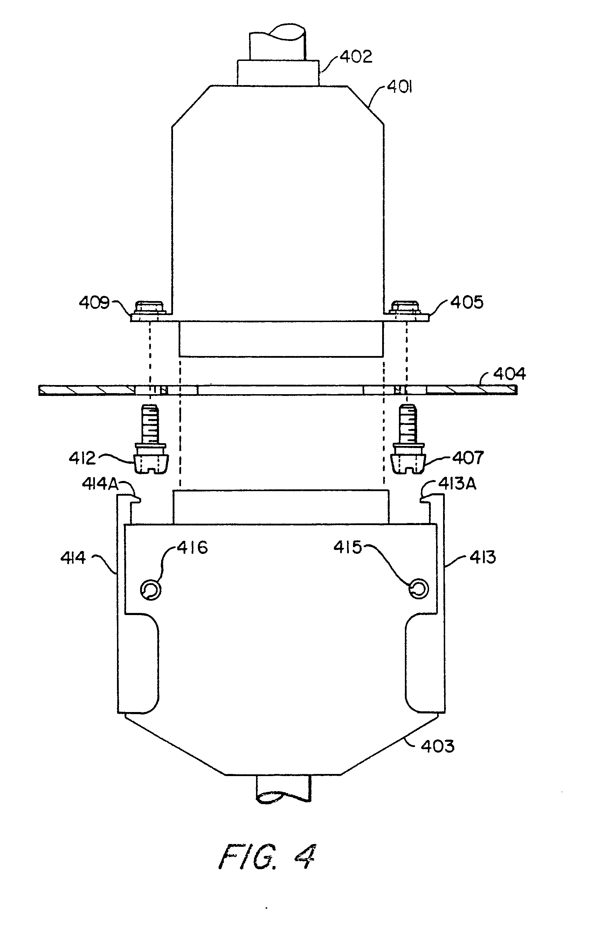

Referring now to Figure 3, there is shown an exploded side view diagram of a first embodiment of the invention. A molded connector 301 has similar type threaded inserts 305, 309 as the prior art. Also the external molded connector assembly 303 has captive-threaded inserts 308, 310 which are retained on the flange of molded assembly 303 via retainer clips 306, 311. However in place of a prior art threaded stud 107, there is a cylindrical latching stud, known as a "bud" stud. The "bud" stud 307, 312 is cylindrical and has an undercut portion 307A, 307B and a threaded nut portion 307B, 312B which can receive a threaded screw 308, 310. In this embodiment the bud stud is utilized to mount and latch the internal and external molded electrical connectors 301, 303 utilizing threaded inserts 305, 309 and threaded screws 308, 310. In this embodiment, a molded electrical connector 301 forms the internal portion of the connector mounted on bulkhead mounting plate 304. It can be seen that in the field, the external bulkhead connector 303 may be discarded, and in its place an external-type molded electrical connector 403 having latching arms 413, 414, as shown on Figure 4, may be utilized. Without the bud stud, it would be impossible to make a connection directly to the internal connector unless

0 206 320

the old-style threaded screw 107, 112 of Figure 1 were replaced by an old-style isoblock 218, 220 shown on Figure 2. Hence by utilizing the bud-stud the external connectors are backward compatible to internal connectors.

Figure 4 shows an exploded view of the invention utilizing the bud stud with the latching arms. Internal molded electrical connector 401 has similar pressed threaded inserts 405, 409. The internal electrical connector 401 is latched and locked onto the bulkhead mounting plate 405 utilizing the bud stud 407. In this embodiment the external molded electrical connector assembly 403 having spring-loaded latching arms 413, 414 mounted onto the connector assembly 403 via pins 415, 416, can be pressed upward and onto the recessed portion of bud stud 407, 412 so that the external connector 403 is latched and locked to the bulkhead plate 404 via bud-studs 407, 412.

The details of this latching and locking are shown on Figures 6A and 6B. The bud stud 601 has an undercut portion 602 and a screwed portion 605. The screw portion passes through the bulkhead mounting plate 603 and screws into the threaded insert, previously described but not shown in this Figure. The lip of the latching arm 604 fits into the undercut portion of the bud-stud and latches the outside connector assembly to the bulkhead plate 603. Referring to Figure 6B there is shown a front view 606 of the latching arm 604. It should be noted that there is a circular undercut 607 so that the lip of the latching arm fits snugly around the shaft of the undercut portion of the bud-stud.

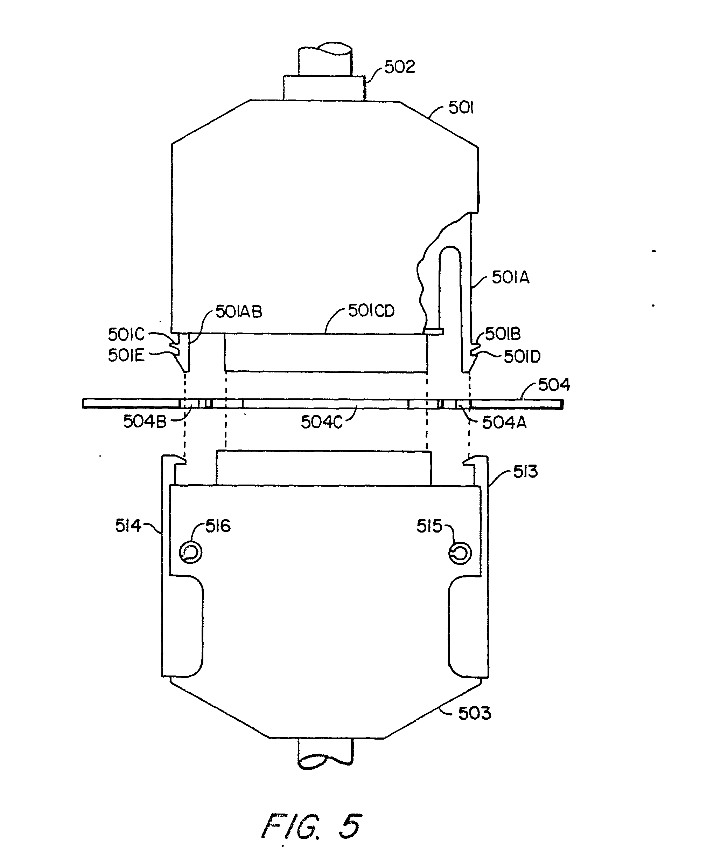

Referring now to Figure 5, there is shown a third embodiment of the invention wherein the internal molded connector assembly 501 is provided with flexible arms 501A and 501AB having protrusions 501B and 501C which is spaced vertically from bridge 501CD equal to the thickness of the bulkhead mounting plate 504. Accordingly when the internal connector assembly 501 is pressed so that the arms 501A and 501AB pass through holes 504A and 504B respectively, they will spring outwardly after passing through a latch in the molded assembly connector 501 to the bulkhead mounting plate 504 leaving lips 501D and 501E exposed. When the external connector 503, having latching arms 514 and 515, is pressed upward and the female and male connectors mate, the lips of the latching arms 513 and 514 will latch onto the lip 501D and 501E of resilient arms 501A and 501AB.

Referring now to Figure 6A there is shown a detailed view of the latching of a latching arm 604 to the undercut portion 602 of a bud-stud which latches the external portion of a connector (not shown) to bulkhead 603.

Figure 6B is a front end view of the head 606 of latching arm 604 showing the slight curve 607, which permits good contact of head 606 to the undercut portion 602 of the bud-stud.

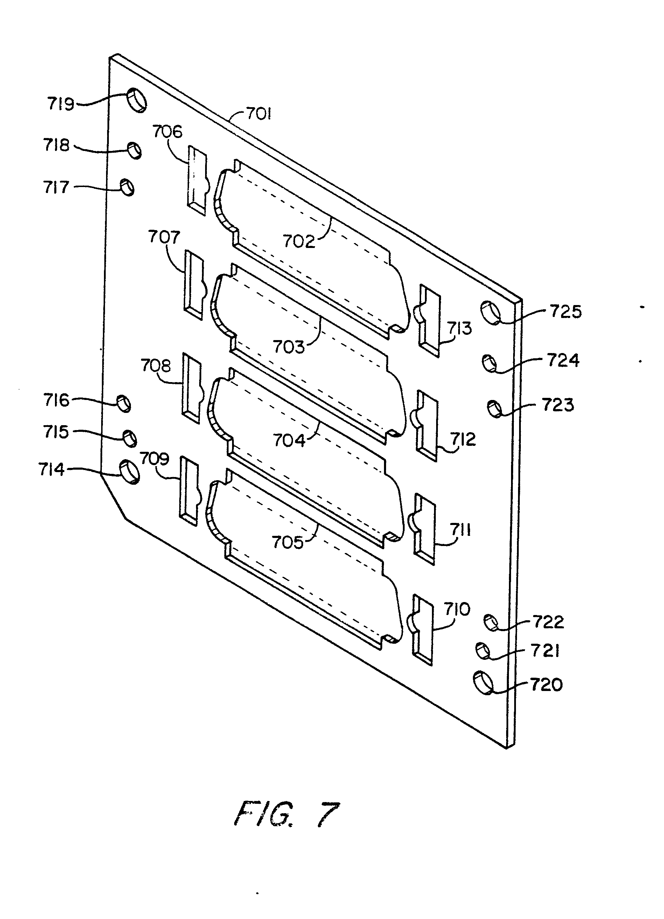

Referring now to Figure 7, there is shown the bulkhead mounting plate 701 which permits the mounting of D-subminiature connectors utilizing standard prior art cable mounting procedures, as well as the new latch and lock pressed version molded assembly techniques. The mounting plate has cutouts 702, 703, 704, 705 each of which has a center opening delineated by dotted lines. This center opening orients the D-shell connector in the keyed direction and permits it to pass through. The additional side-cutouts are for adapting a piece-part application of a secondary box that is normally used in the field and not shown in the drawings. Side oblong cutouts, marked 706-713, are utilized for latching with a latch and lock molded connector as shown on Figure 5. There are various holes on the edges of the plate 714-725 which are utilized to adapt the plate for both backward and forward compatibility for any new system.

From the foregoing description it should be realized that while the present invention has been described in connection with certain particular embodiments thereof, it is to be understood that modifications of these embodiments, as well as other embodiments, utilizing the underlying principles of the invention are included within the spirit and scope of the invention, which is to be limited only by the accompanying claims.

What is claimed is:

1. An apparatus for connecting an electrical cable having a first D-type electrical connector with an electrical cable having a second D-type electrical connector comprising in combination:

(a) a bulkhead for mounting and latching said D-type connector, said bulkhead having first apertures for permitting a portion of one of said D-connectors to protrude through said mounting and further including second apertures;

(b) a first flange on said first electrical connector having threaded inserts pressed into said first flange;

(c) at least one cylindrical bud-stud having a head and tail section with an undercut section between said head and tail section, said tail section having external threads for mating through said second apertures on said bulkhead with said threaded inserts on said first flange, and latching said first electrical connector to said bulkhead, said head section having internal threads; and

(d) a second flange on said second electrical connector having at least one captive-threaded insert for mating with said internal threads of the head-section of said bud stud, whereby said first and second electrical connectors are latched and locked onto said bulkhead and to each other.

2. An apparatus for connecting an electrical cable having a first D-type electrical connector with an electrical cable having a second D-type electrical connector comprising in combination:

    (a) a bulkhead for mounting and latching said D-type connector, said bulkhead having first apertures for permitting a portion of one of said D-connectors to protrude through said mounting and further including second apertures;

    (b) a first flange on said first electrical connector having threaded inserts pressed into said first flange;

    (c) at least one cylindrical bud-stud having a head and tail section with an undercut section between said head and tail section, said tail section having external threads for mating through said second apertures on said bulkhead with said threaded inserts on said first flange, and latching said first electrical connector to said bulkhead, said head section having internal threads; and

    (d) at least one spring-loaded latching arm rotatably mounted on said second D-type electrical connector for engaging the undercut portion of said bud-stud, whereby said first and second electrical connectors are latched and locked onto said bulkhead and to each other.

3. The apparatus as recited in Claim 2 wherein said spring-loaded latching arm includes an elongated latching head at its latching end, and wherein the lower extremity of said latching head is curved to fit around a portion of the cylindrical undercut portion of said bud-stud.

4. The apparatus as recited in Claim 5 wherein the leading edge of said latching-head is curved and tapered in order to ride over the head section of said bud-stud while in the process of being latched to the undercut portion of said bud-stud.

5. An apparatus for connecting an electrical cable having a first D-type electrical connector with an electrical cable having a second D-type electrical connector comprising in combination:

(a) a bulkhead for mounting and latching said D-type connector, said bulkhead having first apertures for permitting a portion of one of said D-connectors to protrude through said mounting and further including second apertures;

(b) a first flange on said first electrical connector having threaded inserts pressed into said first flange;

(c) at least one latching arm integrally mounted onto said first electrical connector, said flexible latching arm having at least one protrusion at its extremity; and

(d) at least one spring-loaded latching arm rotatably mounted on said second D-type electrical connector for engaging through one of the second apertures the protrusion on said flexible latching arm of said first electrical connector, whereby said first and second electrical connectors are latched and locked onto said bulkhead and to each other.

6.    The apparatus as recited in Claim 5 wherein said first D-type electrical connector includes a housing encasing a portion of said electrical connector and having a bridge between the unexposed and exposed section of said electrical connector.

7.    The apparatus as recited in Claim 6 wherein the vertical distance between the bridge and the protrusion on said flexible latching arm is equal to at least the thickness of said bulkhead.

FIG. I
PRIOR ART

FIG. 2

PRIOR ART

0 206 320

FIG. 3

FIG. 4

502
501
501A
501AB
501CD
501C
501E
501B
501D
504
504B
504C
504A
513
514
516
515
503

FIG. 5

FIG. 6B

FIG. 6A

FIG. 7